(19) Europäisches Patentamt
European Patent Office
Office européen des brevets

(11) Publication number: **0 022 841**
**B1**

(12) **EUROPEAN PATENT SPECIFICATION**

(45) Date of publication of patent specification: **15.08.84**

(51) Int. Cl.³: **D 21 C 11/00**

(21) Application number: **80900300.7**

(22) Date of filing: **14.01.80**

(86) International application number:
**PCT/EP80/00002**

(87) International publication number:
**WO 80/01490 24.07.80 Gazette 80/17**

# (54) BLACK-LIQUOR PROCESSING.

(30) Priority: **16.01.79 CH 388/79**

(43) Date of publication of application:
**28.01.81 Bulletin 81/4**

(45) Publication of the grant of the patent:
**15.08.84 Bulletin 84/33**

(84) Designated Contracting States:
**CH DE FR SE**

(56) References cited:
**DE - C - 382 367**
**US - A - 3 236 589**
**US - A - 3 733 255**
**US - A - 3 864 096**

**APPL. CHEM. BIOTECHNOL., volume 27, no. 9, published September 1977 (Oxford, GB), H. El. Saied, "Liquefaction of lignohemicellulosic waste by processing with carbon monoxide and water", see pages 443-452**
**Abstract Bulletin of the Institute of Paper Chemistry, volume 47, no. 9, published March 1977 (Appleton, Wisconsin, US) S. Hill: "Oil from wood wastes" see page 979, abstract no. 9473, Proc. Conf. Wood & Bark Residues for Energy, Ore. State Univ. (Corvallis): 29-34 (May 1974; published February 1975)**

(73) Proprietor: **BATTELLE MEMORIAL INSTITUTE**
**7 route de Drize**
**CH-1227 Carouge/Genève (CH)**
(84) **CH DE FR**
(73) Proprietor: **METSALIITON TEOLLISUUS OY**
***SF-08800 Kirkniemi (FI)***
(84) **SE**

(72) Inventor: **JOHANSSON, Ake Allan**
**Rue des Lattes 13**
**CH-1217 Meyrin (CH)**

(74) Representative: **Dousse, Blasco et al,**
**7, route de Drize**
**CH-1227 Carouge/Genève (CH)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 022 841 B1**

**Description**

Technical field

The present invention concerns an improved process for treating the black liquor involved in chemical pulping process i.e. as issuing from the digestion of wood and other cellulosic materials with alkali sulfide solution in the Kraft pulping process.

In the alkaline processes for manufacturing cellulosic pulp, lignocellulosic material such as straw or wood in comminuted form is digested in a sodium hydroxide solution, either in the presence or in the absence of sodium sulfide (depending on the process) whereby the lignin and hemi-cellulosic fractions get dissolved by forming what is called "black-liquor". The pulp is separated from the black-liquor, for instance by filtration or centrifugation and used for making carton or other high tenacy cellulosic products. Then the black-liquor, which still contains dissolved about 50% organic matter based on the original wooden products having undergone digestion, must be processed for recovering the mineral sulfur and sodium compounds and for separating the organics which can be used as fuel to provide power to the plant.

Background of the art

There exists several processes for recovering black-liquor components, some of which are described in the following publication: Proceedings from the Gunnar Sundblad Seminar at Billingehus, Skövde, STFI Meddelande Serie D No. 7. Whatever differences between such processes, they all involve eliminating the water from the black-liquor by putting it into the gaseous state (concentrating by evaporation, drying, spraying or direct burning) which, energywise, is quite uneconomical. For instance, in the process most used today (the Tomlinson process) the black-liquor is first concentrated by evaporation, then it is sprayed in a burner furnace where it undergoes partial combustion with evolution of flue gases and separation of the mineral compounds in the form of sodium carbonate and sulfate in the Kraft process. Thereafter, the latter must be reduced again to sulfide with part of the flue gases. It is common knowledge that besides its poor energy conversion efficiency, the above-described reactor is hazardous to operate (many have exploded) and the maintenance costs are very high. The other processes, among which the St. Regis (USP 3.762.989), the Weyerhauser and the SCA-Billerud (see the abovementioned reference) are possibly less hazardous to operate but their energy look-out is hardly better and their economics have not been fully demonstrated yet.

Obviously, a process whereby the organic product salts in the aqueous phase of the black-liquor could be separated from the aqueous phase without having to convert the water of such phase to vapor and in which such organic material would be in a form easy enough to handle and to convey to other locations (most present processes produce carbon residues and tars which stick to and rapidly foul the equipments) would be much appreciated. Thus, recently Houssni El-Saied J. Appl. Chem. Biotechnol. *1977, 27,* 443—462, reported the separation of ligno-hemicellulosic materials from waste black-liquor by acidification with sulfuric acid and settling, followed by the conversion of the isolated solid material to oil by heating under pressure with water and carbon monoxide. Indeed, under such conditions, hydrogen is produced according to the reaction,

$$CO+H_2O \rightarrow H_2+CO_2$$

and achieves liquefaction of solid lignocellulosic materials by depolymerization, hydrogenation and hydrogenolysis of the ether bonds present in such materials. However, this method proved to be unsatisfactory on an industrial point of view for the following reasons: this separation technique is tedious and consumes sulfuric acid; the filtered liquor having been acidified, the mineral reagents can no more be conveniently recovered and recycled; the liquefaction operation leaves some part of the material in sold form which must be separated from the oil by hydrocarbon extraction.

Disclosure of the invention

It has been discovered now with great surprise that black-liquor can be subjected directly to treatment with CO under heat and pressure, which treatment leads to the formation of an oil phase insoluble in the water phase and which can be separated by decantation. In this process, most of the organics are converted to oil, a small part of it is gasefied and the amount remaining in the water phase is negligible with regard to further recovery operations.

Therefore, the process of the invention comprises contacting the Kraft black-liquor directly issuing from the digester tank (or from the evaporation units) with carbon monoxide under a pressure of 145—220 bar and a temperature of 210—330°C until substantially all the organic matter dissolved therein is converted to liquid and gaseous products, the liquefied portion thereof forming a liquid phase insoluble in the water phase and easily separable therefrom. In this process, any preliminary treatment of the black-liquor is unnecessary and can be performed only if desired, e.g. partial evaporation.

This invention was most unexpected and its practically quantitative yields are perhaps due to the presence of the minerals in the black-liquor which possibly act as catalysts. This possibility is actually backed up by some finds of El Saied (see above reference) that some added minerals such as sodium hydroxide, sodium carbonate or calcium oxide acted as

catalysts in his liquefaction experiments of the solid black-liquor extracts.

Best methods of carrying out the invention

The conditions to perform the process of the present invention are 145 to 220 bars, 210—330°C. Below 200°C, the reaction becomes somewhat sluggish and above 350°C the pressure build-up is hard on the equipment. Temperature ranges of 270—330°C are actually preferred at least for one step conversion. The concentration in solids of the black-liquor used is not critical and can be comprised for instance between 100 and 500 g/l of organics and 50—200 g/l of mineral compounds. In practice all types of black-liquors involved in the chemical pulping industry can be treated that way. Also, the types of reactors in which the above oil conversion treatment can be carried out are not at all critical and most usual types of reactors for treating liquids under heat and pressure can be used. For instance, the reaction operates as well in a 1 liter laboratory autoclave as in a large scale industrial high pressure reactor.

The conversion operation can be conducted in one stage or, otherwise in two or more stages. If the conversion is carried out in, say two stages, the heating under carbon monoxide pressure is interrupted at some point at which all or part of the $CO_2$ formed during the reaction is allowed to escape. This can be done without interrupting the heating or, better, by allowing the autoclave to cool to some extent, even down to room temperature, releasing the pressure and refilling the autoclave with a fresh portion of reducing gases. This method has two main advantages: a) it improves the overall yield of about 10% as compared with the one stage conversion under similar conditions; b) it permits using more gentle overall conditions. Thus, for instance, in one preferred operational sequence, the working conditions of the first conversion stage are set up at high initial pressure (about 50—80 bar of reducing gases at room temperature) and low temperature (about 210—220°C); then, in the second stage, the initial pressure is set at lower initial values (about 30—40 bar) and the heating is carried out at higher temperatures (in the range of 300—330°C). Therefore, by this method the overall pressure build-up on the equipment at final operating temperature is maintained under more reasonable limits without lowering the ultimate oil yields.

The invention will now be more fully illustrated with reference to the accompanying drawing which represents schematically a Kraft pulping plant in which the invention is incorporated.

The plant comprises a digester tank 1 into which the wooden chips to be pulped and the chemicals are introduced through the inlets represented by the arrows 2 and 3. After digestion, the pulp is separated and removed at bottom of tank as shown by arrow 4 and the black-liquor is sent to an evaporator 5 where it gets concentrated (the evaporator is a purely optional step in the present invention). Then, the black-liquor enters a pressure reactor 6 comprises a heating system represented schematically by a coil 7. Carbon monoxide, compressed by compressor 8, is introduced into reactor 6 whereby the black-liquor is subjected to heat and pressure until all its organic components are converted to oil and gas. Then, the gas, oil and water phases are all sent to a settling tank 9 whereby the gas is collected as shown by the arrow 10 and the oil and water phases are separated by decantation (or centrifugation). It is to be understood that the various phases in this process are driven from and to the above described processing units by means known in the art (pumps, valves, etc.) and not shown here for the sake of simplicity and to avoid overcrowding. The oil is collected and cooled in a heat-exchanger 11 wherein the heat can be recovered and used elsewhere whereas the water phase which does not contain any significant quantity of organics is flown to a tank 12 wherein the separation of the mineral compounds in the form of sodium sulfate and carbonate is effected. Such separation can be achieved by classical means, e.g. evaporation and crystallization or by ultra-filtration under pressure (such pressure can be provided easily because of the existence of the high operating pressures required for reactor 6). The water from this separation can either be discarded or reused as shown in the drawing and to be discussed hereinunder.

Then, the solid salts are subjected to reduction in the kiln 13 by means of either coal provided from an outside source (see arrow 14) or oil (see arrows 15 and 14). The carbon monoxide produced during reduction is compressed by pump 8 and fed to the reactor 6. The reduced salts which consists now of sodium sulfide and sodium carbonate are then reacted in a reactor 16 with a lime slurry (see arrow 17), whereby the sodium carbonate is converted to hydroxide with simultaneous precipitation of chalk which is separated in tank 18 from the concentrated solution of $Na_2S$+NaOH. This concentrated sulfide and caustic solution is further diluted with water, e.g. the water separated from the minerals in tank 12 and transported by line 19 and the resulting liquor (white-liquor) is recycled in the process through line 20 and the inlet represented by arrow 3. It should be noted that only a small part of the oil generated in reactor 6 may be required to effect the reduction of the salts in kiln 13. Therefore, most of this oil can be used as fuel or stored as a refining stock.

In a modification of the present installation, another (or more) a reactor could be inserted in the circuit between present reactor 6 and tank 9, by means being provided between the two reactors to have the mixture cooled (cooling coil),

the pressure be released (valve opening in order to allow carbon dioxide formed to escape) and then be introduced into the other reactor, whereby it would be subjected again to heat and reducing gases pressure by means of the same pump 8 or another separate pump supplying the same or a different gas mixture. Additional items and the above means are not shown on the drawing since they can be visualized and selected easily by any average man skilled in the art. This embodiment modification is for ensuring a two (or more) stage conversion, as discussed above with reference to a lab autoclave experiment, with consecutive yield improvement and the setting of milder overall conversion conditions.

Reduction to practice

The following Examples illustrate the invention in further detail.

Example 1

In a one liter autoclave were introduced 240 g of a black-liquor from a Kraft pulp mill containing 64% solids and 210 g of water. The autoclave was connected to a carbon monoxide supply and set to an initial pressure of 70 bar. The mixture was heated to 290°C (corresponding to a maximum pressure of 185 bar), for 2 hours.

After cooling to room temperature the autoclave was opened and it was found that the organic material in the black-liquor had separated into an oily viscous layer floating on the light brown aqueous phase containing the inorganic constituents of the black-liquor. The amount of oil recovered was 40 g corresponding to more than 70% oil conversion of the total organics in the black-liquor. The water phase of brownish color did not contain any significant amount of organic matter, the remaining 30% having been converted to gas.

Example 2

240 g black-liquor, 210 g water and 10 g sodium hydroxide were introduced in the same reactor mentioned in Example 1. The initial CO pressure was 70 bar; heating was done for 1 hr to 305°C corresponding to a maximum pressure of 220 bar; 42 g of oil pourable at room temperature separated as layer floating on light green aqueous phase. Composition of oil: C 63.3%, H 6.05%, O 17.65%, N 0.1%, $H_2O$ 13%.

Example 3

300 g black-liquor, 150 g water and 5 g sodium hydroxide were introduced into a 1 liter reactor and subjected to an initial carbon monoxide pressure of 70 bar. Then the reactor was heated for 1 hr at a temperature of 300°C corresponding to a pressure of 145 bar. There were recovered 56 g of an anthracene-like product corresponding to more than 75% conversion efficiency. Composition: C 73.1%, H 8.1%, N traces, O 15.3%, S 3.1%, $H_2O$ 9%. Corresponding to approximate fuel value 8330 of kcal/kg.

Example 4

200 g black-liquor, 50 g water and 80 g of oil from previous experiments were introduced into the reactor which was subjected to an initial carbon monoxide pressure of 70 bar and to heat. The final temperature was 300°C and the pressure reached 200 bar during 1 hour. There were recovered 112 g of oil pourable at room temperature.

Analysis of the undried product gave: C 66.9%, H 7.5%, N 0.1%, O 13.8%, S 2.7%, $H_2O$ 9%. Corresponding to approximate fuel value of 7660 kcal/kg.

Example 5

240 g black-liquor were put into an autoclave like in Example 1 and heated to 210°C for one hour under a 50:50 (V/V) mixture of carbon monoxide and hydrogen; the initial pressure was 70 bar. Then, the autoclave was cooled, the pressure was fully relieved for allowing all gases, including carbon dioxide to escape, then a fresh portion of carbon monoxide/hydrogen was reintroduced (initial pressure 30 bar) and the reaction was pursued for 1 hr at 310°C.

After cooling and work-up as in the previous Examples, 46 g of oil were recovered.

Further comments on the prior art

After this application was filed for securing a priority date, a Standard Search was conducted and provided the following references:

1. FR 1.319.466 (Delibrator)
2. USP 3,864,096 (Urban)
3. USP 3,733,255 (Appell)
4. DE 382.367 (Fischer)
5. I. Appl. Chem. Biotechnol. *27*, 443—452 (1977) (El-Saied)
6. Abstract, No. 9473, Abstr. Bull. Inst. Paper Chem. *47* (9) 29—34 (1977) (Hill)

Reference 1 concerns a process for the treatment of solutions or effluents arising from cellulose processing. It consists in spraying the liquor to be treated in a stream of hot gas such as water vapor, carbon dioxide, carbon monoxide, hydrogen, nitrogen or mixtures thereof. The heat necessary for heating the gas is obtained from the burning of a fuel such as coal, liquid fuel or the gases evolved during said processing. There is no question in this reference of heating the liquor with carbon monoxide and hydrogen under pressure in order to quantitatively convert the organic matter therein into oil or gas. Therefore, Reference 1 does not anticipite the invention.

Reference 2 concers a process for converting cellulose products into a hydrocarbon liquid oil by heating with hydrogen or a mixture of hydrogen and carbon monoxide plus ammonia

and water. By looking at the Examples, it is found that the conversion yields do not exceed about 50% in the best case. Therefore, since in the invention the conversion is nearly quantitative (this being possibly due to the nature of the products under treatment or to the catalytic effect of the minerals dissolves in the black-liquor), Reference 2 does not anticipate the invention or makes it obvious.

Reference 3 concerns the treatment of sewage sludge with carbon monoxide plus water and heat in order to form heavy oils. The reference indicates that alkali and earth-alkali hydroxides and carbonates act as catalysts in the reaction. However, the yields are very low (around 25%) which seems to indicate, with reference to the present invention, that black-liquor behaves quite differently in such circumstances from ordinary sludge. Since the substrate to be treated and the yields are different from the invention, the novelty of the latter is not impaired by Reference 3. However, the reason why black-liquor behaves differently from sludge is not clear. It is however pointed out that, in the reference, large amounts of heavy products and bitumen are obtained and that conversion ratios are generally below 40% whereas, in the invention, the amount of products other than oil, gases or water dissolved products, is generally negligible. It seems therefore that the organic content of black-liquor favors its convertibility to oil as compared to municipal sludge.

Reference 4 is an old German Patent (1920) which concerns a process for reducing organic matter such as coal, peat or heavy oil into ether soluble oils by heating with water and carbon monoxide in an autoclave, optionally using basic agents. The yields are low (about 30%). This reference teaches nothing more than the previous references.

Reference 5 is the article by El-Saied which was already discussed in the introduction of the present application. It is not believed that this reference can damage the novelty of the present invention. On the contrary, it puts into evidence the simplicity of the method of the invention, this simplicity being, in itself, surprising.

Reference 6 concerns the converting of organic wastes into oil by heating with carbon monoxide and water. The reference speaks of "wood wastes" and more particularly of lignin, but not of black-liquor. Further, the reference provides no detail on yield, the catalysts and the conditions used.

## Claims

1. A process for treating Kraft black liquor and separating the organic components thereof from the water phase without having to convert said water to water vapor, in which said Kraft black liquor is contacted with carbon monoxide under a pressure of 145—220 bar and a temperature of typically 210—330°C until substantially all organic matter dissolved therein is converted to liquid and gas products, the liquefied portion forming a liquid oil phase insoluble in the water phase and easily separable therefrom.

2. The process of claim 1, wherein the oil and the water phase are separated by decantation or centrifugation.

3. A method of working up waste Kraft black liquors containing sodium sulfate resulting from chemical pulping which includes:

a) digesting the lignocellulosic material with aqueous sodium hydroxide or sodium hydroxide and sodium sulfide, thus forming pulp and the black liquor,
b) separating the pulp from the black liquor,
c) treating the black liquor for separating the organic compounds dissolved therein from the water phase,
d) separating the used mineral chemicals from said water phase,
e) regenerating the sodium sulfide from said used chemicals by reduction and the sodium hydroxide by treatment with lime and,
f) recycling said sodium hydroxide or said sodium hydroxide plus sodium sulfide, characterized in contacting the black liquor in step c) at temperatures of 210—330°C under pressure of 145—220 bar with carbon monoxide until said organic compounds are converted to gas and oil, said oil being insoluble in the water phase, and separating that oil by decantation or centrifugation.

4. The method of claim 3, wherein the reduction of the used chemicals of step e) is effected by using the oil obtained in step c).

5. The method of claim 3, wherein the carbon monoxide produced by the reduction of the used chemicals in step e) is used to carry out the treatment of step c).

## Patentansprüche

1. Verfahren zur Behandlung von Kraft-Schwarz-Ablauge und Abtrennung der organischen Bestandteile dieser aus der Wasserphase ohne Umwandlung des Wassers in Wasserdampf, wobei die Kraft-Schwarz-Ablauge bei einem Druck von 145 bis 220 Bar und einer Temperatur von 210 bis 330°C mit Kohlenmonoxid in Berührung gebracht wird, bis im wesentlichen alle darin gelöste organische Substanz in flüssige und gasförmige Erzeugnisse umgewandelt ist, wobei der verflüssigte Anteil eine flüssige Ölphase bildet, die in der Wasserphase unlöslich und aus dieser leicht trennbar ist.

2. Verfahren nach Anspruch 1, dadurch gekennzeichnet, daß die Öl- und die Wasserphase durch Dekantierung oder Zentrifugierung getrennt werden.

3. Verfahren zur Aufarbeiten der Abgänge

von Kraft-Schwarz-Ablaugen, die Natriumsulfat aus chemischem Kochprozeß enthalten, das folgende Schritte umfaßt:

a) Digerieren des lignozellulosen Materials in wässrigem Natriumhydroxid oder Natriumhydroxid und Natriumsulfid, wodurch Pülpe und die Schwarz-Ablauge gebildet werden,
b) Trennung der Pülpe von der Schwarz-Ablauge,
c) Behandlung der Schwarz-Ablauge zum Trennen der darin gelösten organischen Bestandteile aus der Wasserphase,
d) Trennung der verwendeten mineralischen Chemikalien aus der Wasserphase,
e) Regenerierung des Natriumsulfid durch Behandlung mit Kalk, und
f) Wiedereinbringung des Natriumhydroxid oder des Natriumhydroxid plus Natriumsulfid in den Zyklus,

dadurch gekennzeichnet, daß in Schritt c) die Schwarz-Ablauge bei Temperaturen von 210 bis 330°C und einem Druck von 145 bis 220 Bar mit Kohlenmonoxid in Berührung gebracht wird, bis die organischen Bestandteile in Gas und Öl verwandelt sind, wobei das Öl in der Wasserphase unlöslich ist, und daß das Öl durch Dekantierung oder Zentrifugierung abgetrennt wird.

4. Verfahren nach Anspruch 3, dadurch gekennzeichnet, daß die Reduktion der verwendeten Chemikalien in Schritt e) durch Verwendung des in Schritt c) erhaltenen Öls stattfindet.

5. Verfahren nach Anspruch 3, dadurch gekennzeichnet, daß das durch Reduktion der in Schritt e) verwendeten Chemikalien erzeugte Kohlenmonoxid zur Behandlung nach Schritt c) verwendet wird.

**Revendications**

1. Procédé pour traiter la lessive-noire produite par le procédé Kraft et pour en séparer les constituants organiques de la phase aqueuse sans avoir à vaporiser l'eau de celle-ci, caractérisé par le fait qu'on met en contact cette lessive-noire du procédé Kraft avec du monoxyde de carbone sous une pression de 145—220 bar et à une température de 210—330°C jusqu'à transformation pratiquement complète desdits constituants organiques en produits liquides et gazeux, la portion liquéfiée consistant en une phase liquide huileuse insoluble dans la phase aqueuse et pouvant en être facilement séparée.

2. Procédé suivant la revendication 1, caractérisé par le fait qu'on sépare la phase huileuse de la phase aqueuse par décantation ou centrifugation.

3. Procédé pour retravailler la lessive noire résiduelle contenant du sulfate de soude, provenant du procédé de fabrication de pâte de bois chimique Kraft, suivant lequel on

a) fait digérer une matière lignocellulosique avec de la soude caustique aqueuse ou de la soude caustique additionnée de sulfure de soude de manière à obtenir de la pâte cellulosique et de la lessive-noire,
b) on sépare la pâte de cette lessive-noire,
c) on traite cette lessive-noire afin de séparer ses constituants organiques dissous de sa phase aqueuse,
d) on sépare les constituants minéraux résiduels de ladite phase aqueuse,
e) on régénère le sulfure de soude à partir desdits constituants minéraux résiduels par réduction et la soude caustique par traitement à la chaux, et,
f) on réinjecte dans le cycle ladite soude caustique ou ladite soude caustique additionnée de sulfure de soude, caractérisé par le fait qu'à l'étape c) on met en contact la lessive-noire avec du monoxyde de carbone à des températures de 210—330°C et sous des pressions de 145—220 bar jusqu'à transformation desdits constituants organiques en produits huileux liquides et gazeux, ladite partie liquide étant insoluble dans la phase aqueuse, et on sépare celle-ci par centrifugation ou décantation.

4. Procédé suivant la revendication 3, caractérisé par le fait que pour la réduction, au point e), des résidus minéraux, on utilise ladite huile organique obtenue à l'étape c).

5. Procédé suivant la revendication 3 au cours de l'étape e) duquel il se produit, pendant la réduction des minéraux résiduels, du monoxyde de carbone, caractérisé par le fait qu'on utilise ce monoxyde de carbone pour effectuer l'étape c).

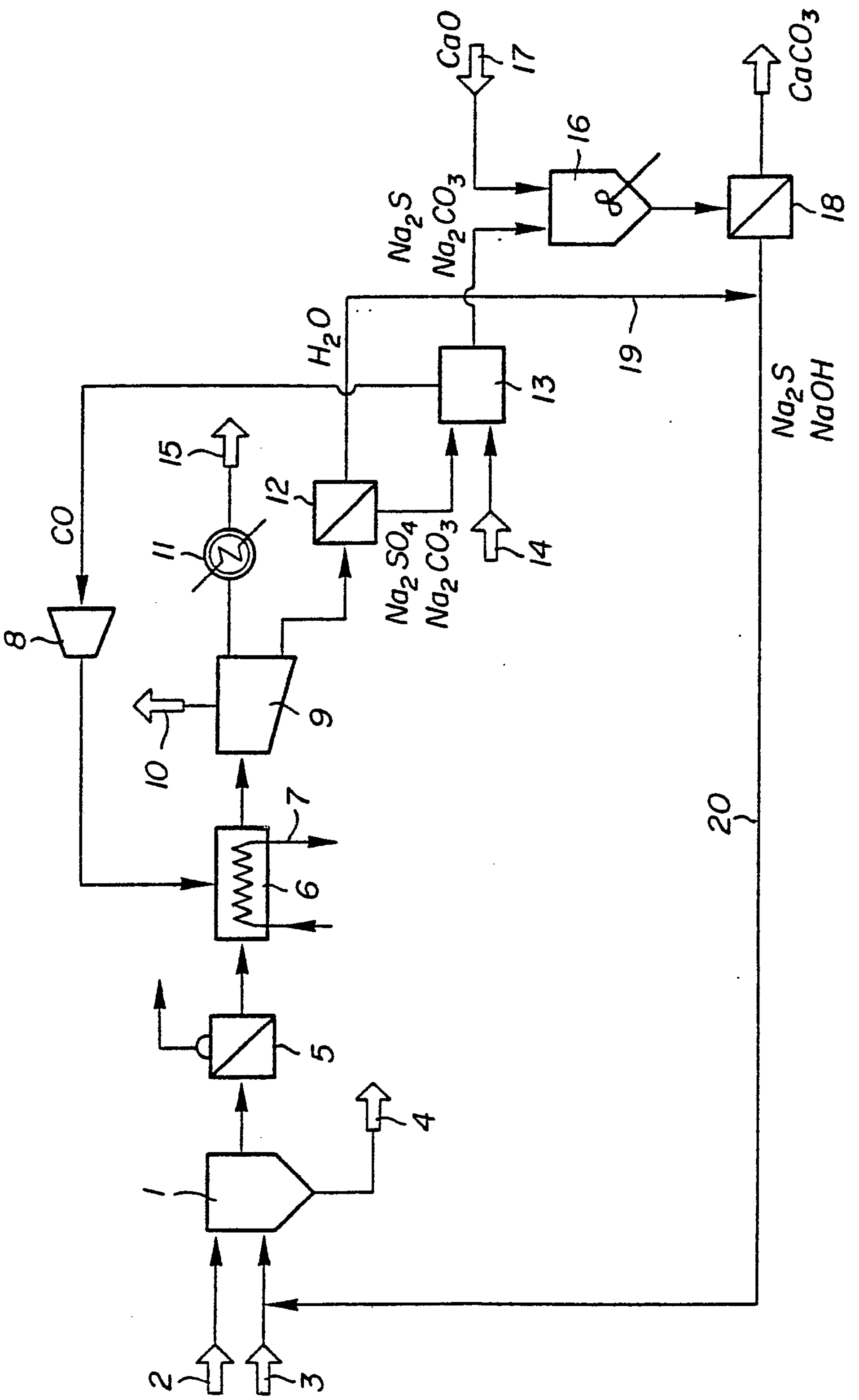
CaO
17
CaCO3
16
Na2S
Na2CO3
18
H2O
19
13
Na2S
NaOH
CO
15
12
11
Na2SO4
Na2CO3
14
8
9
10
20
7
6
5
4
1
2
3